# EUROPEAN PATENT SPECIFICATION

(11) **EP 3 265 264 B1**
(45) Date of publication and mention of the grant of the patent: **08.07.2020**
(21) Application number: 16707445.9
(22) Date of filing: 02.03.2016
(51) Int. Cl.: B23K 101/00, B23K 103/10, B23K 9/173, B23K 9/23, B23K 35/00, B23K 35/28, B23K 35/38, C22C 21/02, C22C 21/04, C22C 21/08

(54) **PROCESS FOR MANUFACTURING WELDED PARTS COMPRISING ARC-WELDED WROUGHT COMPONENTS MADE OF 6XXX SERIES ALUMINIUM ALLOY USING A 5XXX SERIES ALUMINIUM FILLER WIRE**
VERFAHREN ZUM HERSTELLEN VON GESCHWEISSTEN BAUTEILEN, DIE LICHTBOGEN-GESCHWEISSTE TEILE AUS KNETLEGIERUNGEN DER 6XXX-SERIE ALUMINIUMLEGIERUNGEN ENTHALTEN UNTER VERWENDUNG EINES 5XXX ALULMINIUM SCHWEISSDRAHTS
PROCÉDÉ DE FABRICATION DE PIÈCES SOUDÉES COMPRENANT DES COMPOSANTS CORROYÉS SOUDÉS À L'ARC À BASE D'ALLIAGE D'ALUMINIUM DE SÉRIE 6XXX À L'AIDE D'UN FIL D'APPORT À BASE D'ALUMINIUM DE SÉRIE 5XXX

(30) Priority: 03.03.2015 EP 15000597
(43) Date of publication of application: 10.01.2018
(73) Proprietor: Constellium Valais SA (AG, Ltd), 3960 Sierre (CH)
(72) Inventor: SKUBICH, Alexis, 8006 Zurich (CH); LAYE, Julien, 38134 LA SURE EN CHARTREUSE (FR); JARRETT, Martin, Little Bourton Oxfordshire OX17 1RB (GB); TIRARD-COLLET, Roland, 38340 Voreppe (FR)
(74) Representative: Constellium - Propriété Industrielle
(86) International application number: PCT/EP2016/054409
(87) International publication number: WO 2016/139239

(56) References cited:
- EP-A1- 0 936 278
- WO-A1-2006/102982
- CN-A- 103 603 002
- CN-A- 103 862 177
- US-B1- 6 685 782
- GUNGOR BEYTULLAH ET AL: "Mechanical and microstructural properties of robotic Cold Metal Transfer (CMT) welded 5083-H111 and 6082-T651 aluminum alloys", MATERIALS AND DESIGN, vol. 54, 1 February 2014 (2014-02-01), pages 207-211, XP028774343, ISSN: 0261-3069, DOI: 10.1016/J.MATDES.2013.08.018

## Description

The invention relates to welded assemblies, which comprise arc-welded wrought components made of 6xxx series aluminium alloys and are adapted for use as parts predominantly in, but not limited to, the transportation sector, for example as parts of land transportation vehicles (rail, automotive, etc.), such as floors, seats, reinforcements, stiffeners, bumpers, frames, crash-boxes, etc. In the frame of the present invention, the joints are obtained by arc-welding, typically TIG (tungsten inert gas), MIG (metal inert gas) or CMT (cold metal transfer). For such parts not only the basic materials but also the junction welds and the areas near the latter should exhibit improved mechanical properties.

Unless otherwise stated, all information concerning the chemical composition of the alloys is expressed as a percentage by weight based on the total weight of the alloy. "6xxx aluminium alloy" or "6xxx alloy" designate an aluminium alloy having magnesium and silicon as major alloying elements. "AA6xxx-series aluminium alloy" designates any 6xxx aluminium alloy listed in "International Alloy Designations and Chemical Composition Limits for Wrought Aluminum and Wrought Aluminum Alloys" published by The Aluminum Association, Inc.. Unless otherwise stated, the definitions of metallurgical tempers listed in the European standard EN 515 will apply. Static tensile mechanical characteristics, in other words, the ultimate tensile strength Rₘ (or UTS), the yield strength at 0.2% plastic elongation R_{p0,2} (or YTS), and elongation A% (or E%), are determined by a tensile test according to NF EN ISO 6892-1..

From US 4 909 861 it is known to obtain arc-welded assemblies comprising aluminum alloy sheets made from an aluminium alloy consisting essentially of 0.5 to 1.4 wt.% magnesium, 0.6 to 1.5 wt.% silicon, 0.005 to 0.1 wt.% titanium and less than 0.1 wt.% copper, and aluminum and inevitable impurities for the remainder, the ratio of the silicon content to the magnesium content being 0.65 or more. These aluminum alloy sheets are claimed having good weldability, filiform corrosion resistance, formability, and bake-hardenability. However, the weldability was only evaluated on stress-free junction welds made using a 4043 filler wire by merely counting the number of micro-cracks observed in the heat affected zone (HAZ).

However, there is still the need to have welded joints with improved mechanical properties, in particular an improved compromise between strength and ductility, and welds manufactured using 5xxx filler wires generally provide higher strength than those manufactured using 4xxx filler wires as stated in "Table 5 Recommended filler metals for welding wrought aluminium alloys" from Alusuisse datasheet "TIG and MIG Welding of Aluminium Alloys - Edition December 1999".

US 6 685 782 discloses an alloy containing in wt% 0.40 to 0.80 wt% Silicon, 0.40 to 0.70 wt % Magnesium, 0.05 to 0.20 % Vanadium and lesss than 0.30 of Iron, less than 0.20 of Copper, less than 0.15 wt% of Manganese and less than 0.10 of Chromium, Titanium and Zinc. This alloy is claimed to be well suited for use in Vehicle manufacture and permit to have a good combination of properties viz., strength, elongation, weldability and reliability of production. The inventors of the present object of invention have however observed that the composition discloses in US 6 685 782 does not permit to obtain a good bending ratio, presumably due to the presence of vanadium (alloy H described in the example).

For the reason above, in the frame of the present invention, the joints are obtained by arc-welding using a 5xxx-series aluminium alloy as filler material. But the replacement of a 4xxx filler wire with a 5xxx filler wire renders the manufacturing of the parts more sensitive to the occurrence of micro-cracks during arc-welding. This is essentially due to the fact that 5xxx alloys of the filler wires have a far higher solidus than 4xxx and than the base material. The weldability of 6xxx-series aluminium alloys to be used for manufacturing the targeted welded parts should consequently be defined with more details than in US 4 909 861, such that the weld junctions can be more accurately controlled. There is also a need to improve the bendability of welds with regards to US 6 685 782.

CN 103603002 discloses a surface removing agent capable of realizing zero-defect direct-current positive polarity welding of a 6XXX-series aluminum alloy. The surface film removing agent is characterized by being composed of a plurality of fluorides including LiF, NaF, MgF2, AlF3, KAlF4, K2SiF5 and the like; the granularity of the fluorides is less than 10 microns. Before welding, absolute ethyl alcohol is used for uniformly mixing the surface film removing agent and then a mixture is sprayed on a part to be welded on the surface of the aluminum alloy; then a direct-current positive polarity TIG (Tungsten Inert Gas) welding method is used for welding. The surface film removing agent disclosed by CN 103603002 has the effect of well removing defects in a surface oxidized film and a welding line of the 6XXX-series aluminum alloy and can realize the direct-current positive polarity TIG welding of the 6XXX-series aluminum alloy to obtain a welding connector with good performance and without pore defects. CN 103603002 discloses example of welds of 6005 or 6082 type aluminum alloy base plate using a filler wire made of a 5XXX series.

CN 103862177 disclosed a laser-GMA (gas metal arc) hybrid heat source filler wire welding method which has the technical advantages of high welding speed, low welding heat input, tiny welding deformation, great weld penetration, easiness in implementing one-side welding with back formation, joint microstructure refinement, joint property enhancement and the like. CN 103862177 discloses an example of a weld using AA6005A aluminum alloy extrusion part welded together by laser GMA arc welding and using a ER5087 aluminum alloy welding wire.

If subjected to arc-welding, the Al-Mg-Si alloys may sometimes suffer minor microcracks, in particular in the partially melted zone (PMZ), which is the area of the heat affected zone (HAZ) adjacent to the fusion zone (FZ), especially if the filler material is a 5xxx-series aluminium alloy and the weld junction is stress-prone. The main reason for this is that alloys containing eutectic phases, such as 6xxx alloys, will systematically, as inherent to the welding process, display localised melting of these eutectic phases (liquations) in the partially melted zone (PMZ), area of the heat affected zone (HAZ) adjacent to the fusion zone (FZ). Liquations can be more or less pronounced according to the alloy composition, temper and welding conditions. However their presence or absence cannot be directly related in a systematic manner to macro-properties such as, but not limited to, fatigue resistance and tensile strength. Indeed first the investigations of the welded zone are generally led on a limited area of the weld (<0.01% which raises the question about the relevance of such a punctual evaluation) and second, according to the type of liquations (size, location, orientation, inter-/trans-granular) linked to the thermo-mechanical conditions at the time of their generation, the impact on macro-properties varies considerably.

For this reason, the arc-weldability of a 6xxx series aluminium alloy is complex to define as subject to interpretation and subjective evaluation. An obvious example is found in the ISO 10042:2005 "Welding - Arc-welded joints in aluminium and its alloys - Quality levels for imperfections", where for the higher quality standards (C and B grades) the acceptance level for micro-cracks, also referred to as liquations, liquation cracks and grain-boundary openings, is not clearly defined and left open to interpretation (See Table 1, item 2.2 (micro-cracks) of ISO 10042:2005). This is all the more problematic that welded components that undergo high tensile stresses during welding in the partially melted zone (PMZ) as the PMZ is not fully solidified when welded with 5xxx filler wire, because the solidus of the diluted zone is higher than solidus of base material, may display liquation cracks which significantly embrittle the welded joint as described in the SUPPLEMENT TO THE WELDING JOURNAL, APRIL 2004- Liquation Cracking in Full-Penetration Al-Mg-Si Welds - C. HUANG AND S. KOU.

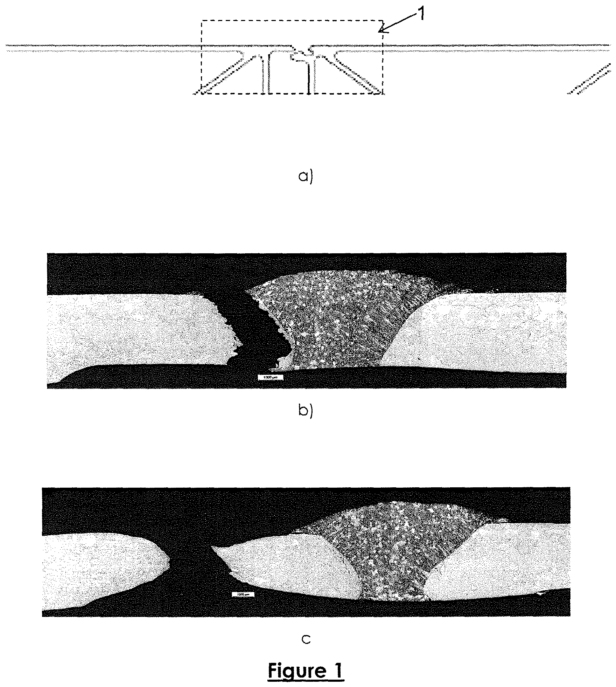

In the frame of the present invention, a welding test-configuration representative of those currently used in the transportation sector, was selected, which is illustrated in Figure 1.

In order to proceed with quantitative evaluation of weldability, the latter has been defined as bending resistance and tensile strength of welds obtained from the selected test-configuration - as measured according to ISO 15614-2, ISO 4136 and ISO 5173.

An object of the invention is a process for manufacturing a welded part comprising the following steps:
a) providing two 6xxx series aluminium wrought products;
b) assembling the two said wrought products by arc-welding with a filler wire;
characterised in that
c) the filler wire is a 5xxx series aluminium alloy
d) the 6xxx-series aluminium alloy of the said wrought product has the following composition:
   0.3 ≤ Si ≤1.0
   Fe ≤ 0.35
   Mn ≤ 1
   0.35 ≤ Mg ≤ 1.2
   Cr ≤0.35, preferably 0.10, more preferably 0.08
   Zn ≤ 0.20
   0.08 ≤ Ti ≤ 0.14
other elements and unavoidable impurities < 0.05 each and 0.15 total, rest aluminium
wherein the ratio Mg/(Si-0.3^{∗}(Mn+Fe)) is higher than 1.0

The chemical composition of the 6xxx series aluminium alloy of the wrought product, which is a component of the welded part according to the invention was defined to obtain high arc-weldability with 5xxx filler material for wrought applications predominantly in, but not limited to, the transport sector by controlling Mg/free Si ratio, adding a controlled content of peritectic elements as, but not limited to, Ti, while controlling Cu and Cr contents. These cumulative controls (Mg/Si free, Ti, Cu and Cr) were defined to obtain arc-welded parts having an improved compromise between strength and ductility, whatever are the temper, the 5xxx filler composition, the microstructure of the wrought product before welding and the arc-welding conditions.

Magnesium is an element which serves, in conjunction with Si, to improve the strength of the aluminium alloy wrought product. If the Mg content is less than 0.35%, the strength of the base material is too low. If the Mg content exceeds 1.2%, on the other hand, the formability of the base material is suboptimal.

Silicon is an element which serves, in conjunction with Mg, to improve the strength of the aluminium alloy wrought product. If the Si content is less than 0.3%, the strength of the base material is suboptimal. If the Si content exceeds 1.0% on the other hand, solidus is excessively low and sensitivity to liquation cracks too high, although the strength of the alloy is improved. Preferably, Si content is between 0.50 % and 0.94%.

Moreover, although the Mg and Si contents are restricted within the above ranges, if the ratio of Mg to Si free (weight contents) is less than 1.0, the bendability of the junction welds is suboptimal. Si free is the part of the silicon, which is not trapped by elements other than magnesium, mainly iron and manganese, to form precipitates other than hardening precipitates Mg2Si. The Si free content is roughly estimated by Si free= Si - 0.3^{∗}(Fe+Mn), where Si, Mn and Fe are weight contents. Accordingly, ratio Mg/(Si-0.3^{∗}(Mn+Fe)), which is approximately the Mg-to-Si free ratio, is adjusted to 1.0 or more.

To have an improved compromise between strength and extrudability, as defined by flow stress, Mg in strong excess is to be avoided, i.e. ratio Mg/(Si-0.3^{∗}(Mn+Fe)) is preferably lower than 1.7, more preferably 1.5. In such a composition range, Mg controls the formation of Mg2Si precipitates. In order to maximize R_{p0,2} and Rₘ after short maturation time, Mg content is preferably higher than 0.6 wt.%.

Titanium is an element which serves to improve the ductility of the aluminium alloy cast and wrought product. Moreover, it has been found in the frame of this invention that a controlled content of titanium in the base material improves the weldability, in particular the bendability of the junction weld. To attain this effect, Ti should be voluntary added during casting at 0.05 wt.% or more either in the form of an Al-Ti master alloy, or in the form of a grain refining Al-Ti-B master (TiB2 particles). When comparing the solidified structure in the fusion zone (FZ) of the tested junction welds where the corresponding base material is with or without Ti additions, it clearly appears that Ti addition unambiguously leads to a refinement of the microstructure of the FZ, even if 5xxx filler materials generally already contain a voluntary addition of Ti (ca. 0.10 wt.%). It is believed that Ti voluntary additions reduce the liquation crack sensitivity. If Ti content exceeds 0.2%, however, large intermetallic compounds are produced. Ti content is higher than 0.08 wt.% to have a significant effect. Ti content is lower than 0.14 wt.%. Ti is comprised between 0.08 wt% and 0.14 wt%.

Manganese and iron serve to control the microstructure of the aluminium alloy wrought product. If their contents increase, however, large intermetallic compounds are produced, thereby lowering the formability of the base material and the bendability of the junction welds. Manganese content is 1.0 wt.% or less. Iron content is lower than 0.7 wt.%, preferably 0.35 wt.%.

Zinc is merely an impurity in 6xxx alloys but may affect corrosion resistance at high levels. Zinc content is 0.20 wt.% or less.

Copper and chromium could also serve to improve the strength of the aluminium alloy wrought product. However, their content should be kept at low levels.

The simultaneous addition of titanium and copper present an excellent welding behaviour with regards to tensile properties but may exhibit a suboptimal bending behaviour if Cu content is too high. Cu content is lower than 0.10%, preferably 0.05 %. It is believed that Cu additions, by further reducing solidus temperature of the base material increase the liquid fraction in the partially melted zone (PMZ) at the point where the fusion zone (FZ) solidifies and retracts, generating relatively high stress levels in the PMZ.

The simultaneous addition of titanium and chromium present an excellent welding behaviour with regards to tensile properties but may exhibit a suboptimal bending behaviour if Cr content is too high. Cr content is lower than 0.35%, preferably 0.10 %, more preferably 0.08 wt.%. It is believed that Cr addition increases quench sensitivity and thereby increases the formation of Mg2Si precipitates on Cr phase particles during the post-weld cooling and hence decreases the material ductility.

Advantageously, the aluminium alloy of the said wrought product is AA6005A with a composition as claimed or, preferably, an alloy, called "Ti-doped 6005A", having the composition of AA6005A with a composition as claimed, except for titanium, which has a content between 0.08 wt.% and 0.14 wt.%.

More advantageously, the aluminium alloy of the said wrought product is AA6082 with a composition as claimed or AA6106 with a composition as claimed, and preferably, an alloy, called "Ti-doped 6082" or "Ti doped 6106", having the composition of AA6082 respectively 6106, with a composition as claimed except for titanium, which has a content between 0.08 wt.% and 0.14 wt.%.

According to the invention, said wrought product may be an extruded profile or a rolled part or a forged one and can be used especially for a transportation vehicle.

Advantageously, the5xxx series aluminium alloy of the said filler material belongs to the group consisting in AA5183, AA5087 and AA5356. Advantageously, the aluminium alloy of the said wrought product is a Ti-doped 6005A, Ti-doped 6008, Ti-doped AA 6106 and Ti-doped 6082. The welded assemblies according to the invention exhibit improved mechanical properties such as strength, ductility and bendability such that they do react better in case of an impact, and even can have a high energy absorption capacity through plastic deformation under a crash load.

### EXAMPLE

The quantitative evaluation of the weldability of various 6xxx-series aluminium alloys was based on the measurement of the tensile strength and the bending resistance of junction welds made by arc-welding edge-to-edge, with a same filler material and in a same spatial configuration, extruded profiles having a same geometry.

Various 6xxx-series aluminium alloys were extruded to form 3 mm thick floor profiles adapted to be joined together edge-to-edge. All of these alloys were extruded from homogenised DC-cast material in diam. 395mm, quenched and aged to T6 temper before being welded.

The chemical composition of the tested profile alloys is listed in table I.

**Table I**

| Alloy | Invention | Si | Fe | Cu | Mn | Mg | Cr | Ti | V | Mg/(Si-0.3^{∗}(Fe+Mn)) |
|---|---|---|---|---|---|---|---|---|---|---|
| A | | 0.58 | 0.20 | 0.00 | 0.14 | 0.58 | 0.00 | 0.02 | 0.01 | 1.21 |
| B | yes | 0.58 | 0.20 | 0.00 | 0.08 | 0.57 | 0.09 | 0.10 | 0.01 | 1.15 |
| C | yes | 0.55 | 0.20 | 0.00 | 0.15 | 0.55 | 0.00 | 0.10 | 0.01 | 1.24 |
| D | | 0.57 | 0.20 | 0.12 | 0.15 | 0.58 | 0.01 | 0.09 | 0.01 | 1.25 |
| E | yes | 0.67 | 0.18 | 0.00 | 0.15 | 0.70 | 0.00 | 0.10 | 0.01 | 1.24 |
| F | | 0.63 | 0.18 | 0.14 | 0.14 | 0.48 | 0.00 | 0.04 | 0.01 | 0.90 |
| G | | 0.50 | 0.18 | 0.02 | 0.07 | 0.58 | 0.00 | 0.01 | 0.01 | 1.36 |
| H | | 0.62 | 0.18 | 0.15 | 0.07 | 0.55 | 0.00 | 0.02 | 0.06 | 1.01 |
| I | | 0.68 | 0.26 | 0.10 | 0.20 | 0.46 | 0.08 | 0.03 | 0.01 | 0.85 |

The junction welds were made by arc-welding under following conditions:
Filler wire : AA5183 (AlMg4.5Mn) - 1.6mm diameter.
Welding speed : 75 cm/min
Voltage : 24 V
Current intensity : 225 A
Protection gas : 100% Ar
Heat input: 3.45kJ/cm
Profile thickness at weld tip (side with backing): 3.5mm

Figure 1a) illustrates the welding test configuration.

Fig. 1 b) and c) illustrate respectively a brittle fracture in the partially melted zone (near the fusion zone) of a tensile specimen representative of a sub-optimal weld performance and a ductile fracture in the heat affected zone (far from the fusion zone) representative of an optimal weld performance

The tensile properties and bending behaviour of the arc-welded joints are listed in Table II. To compare the behaviour of the junction welds, we used the following classification (bending rating):
1: cracks appearing on the sample surface when the bending angle is < 45°
2: cracks appearing on the sample surface when the bending angle is < 90°
3: bending angle 180° reached with cracks larger than 3mm
4: bending angle 180° reached with cracks smaller than 3mm
5: bending angle 180° reached without cracks

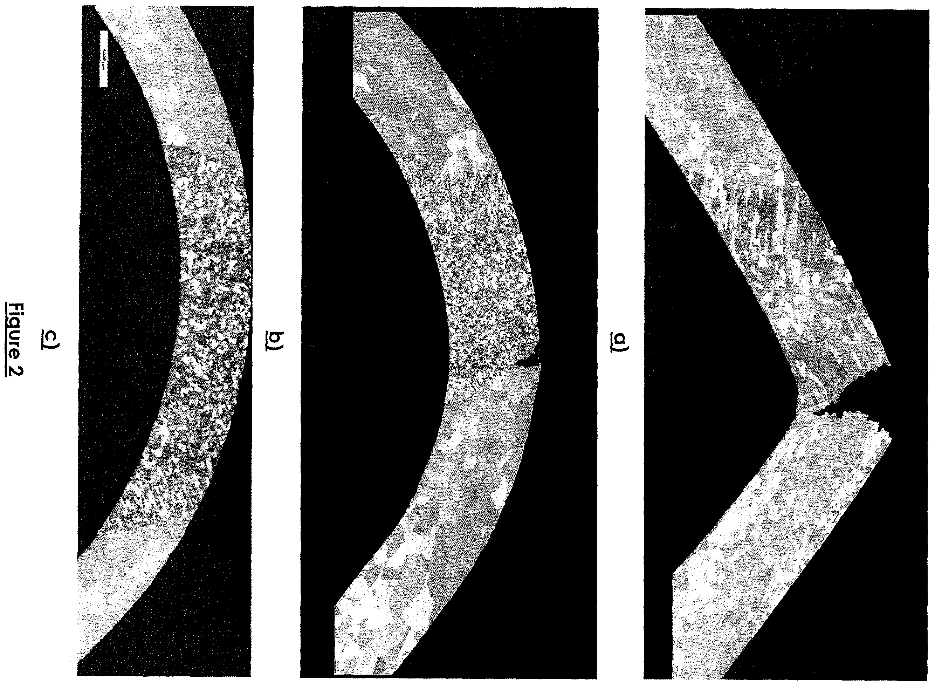

Fig.2 illustrates the cross-section of three bent samples. Fig.2a) illustrates the bent sample corresponding to a junction weld obtained with alloy A (bending rating 1). Fig.2b) illustrates the bent sample corresponding to a junction weld obtained with alloy B (bending rating 3). Fig.2c) illustrates the bent sample corresponding to a junction weld obtained with alloy C (bending rating 5).

**Table 2 : Tensile test properties of welded joints from tested alloys**

| Alloy | UTS (MPa) Min. 165 | YS (MPa) Min. 115 | A50 (%) | Bending rating |
|---|---|---|---|---|
| A | 186 | 125 | 3.3 | 1 |
| B | 171 | 119 | 2.2 | 3 |
| C | 180 | 121 | 4.5 | 5 |
| D | 199 | 130 | 4.4 | 1 |
| E | 190 | 130 | 4.5 | 3-4 |
| F | 134 | 116 | 0.9 | 1 |
| G | 170 | 118 | 2.2 | 1 |
| H | 186 | 125 | 2.8 | 1 |
| I | 194 | 125 | 4.1 | 2 |

The results show that:
i) alloys presenting a low Mg to free Si ratio (inf. to 1.0) and containing no peritectic elements (Cr, Ti, V,...), such as alloy F, present a reduced welded performance with suboptimal tensile properties and suboptimal bending behavior. The base material made out of such alloys also generally display suboptimal ductility, as assessed by bending, in hardened tempers (T64, T6 and T7).
ii) alloys presenting a low Mg to free Si ratio and containing peritectic elements (Cr, Ti,) and Cu in small quantities, such as alloy I, present an acceptable welding behaviour with regards to tensile properties but have a suboptimal bending behavior.
iii) alloys presenting a high Mg to free Si ratio (sup. to 1.0) and containing no voluntary additions of peritectic elements (Cr, Ti, V, ..), such as alloys A (Fig. 2 a)) and G, present an acceptable welded performance with regards to tensile properties but bending behaviour is suboptimal;
iv) alloys presenting a high Mg to free Si ratio (sup. to 1.0) and containing voluntary additions of solely Ti as peritectic element (Cr, Ti, V, ..), such as alloys C (Fig. 2 c)) and E, present an excellent welded performance with regards to tensile properties and bending behaviour. Base material made out of such alloys display an excellent ductility, as assessed by bending, in hardened tempers (T64, T6 and T7);
v) alloys presenting a high Mg to free Si ratio (sup. to 1.0) and containing voluntary additions of peritectic element Ti and Cr, such as alloy B (Fig. 2 b)), present an excellent welded performance with regards to tensile properties and a close to optimal bending behaviour. The lower bending performance in comparison to alloys C and E of iii) is linked to the Cr addition, which increases quench sensitivity and thereby increases grain boundary precipitation during the post-weld cooling and hence decreases the material ductility;
vi) alloys presenting a high Mg to free Si ratio (sup. To 1.0), voluntary additions of solely peritectic element (V) and high Cu addition, such as alloy H present an excellent welded performance with regards to tensile properties but a suboptimal bending behaviour.
vii) alloys presenting a high Mg to free Si ratio (sup. to 1.0), voluntary additions of peritectic element Ti and high Cu-additions, such as alloy D, present an excellent welded performance with regards to tensile properties but a suboptimal bending behaviour. Cu additions, by further reducing solidus temperature of the base material, increase the liquid fraction in the partially melted zone (PMZ) at the point when the fusion zone (FZ) solidifies (as FZ presents a solidus temperature higher than the base material) and retracts generating relatively high stress levels in the PMZ.

## Claims

1. A process for manufacturing a welded part comprising the following steps:
a) providing two 6xxx series aluminium wrought products;
b) assembling the two said wrought products by arc-welding with a filler wire;
**characterised in that**
c) the filler wire is a 5xxx series aluminium alloy
d) the 6xxx-series aluminium alloy of the said wrought product has the following composition:
0.3 ≤ Si ≤1.0
Fe ≤ 0.35
Mn ≤ 1
0.35 ≤ Mg ≤ 1.2
Cr ≤ 0.35, preferably 0.10, more preferably 0.08
Zn ≤ 0.20
0.08 ≤ Ti ≤ 0.14
other elements and unavoidable impurities < 0.05 each and 0.15 total, rest aluminium
wherein the ratio Mg/(Si-0.3^{∗}(Mn+Fe)) is higher than 1.0

2. A process according to claim 1, wherein the5xxx series aluminium alloy of the said filler wire belongs to the group consisting in AA5183, AA5087 and AA5356.

3. A process according to claims 1 or 2, **characterised in that** the ratio Mg/(Si-0.3^{∗}(Mn+Fe)) of the 6xxx series aluminium alloy of the wrought product is lower than 1.7, preferably 1.5.

4. A process according to any of claims 1 to 3, **characterised in that** the magnesium weight content of the aluminium alloy of the said wrought product is higher than 0.6 %.

5. A process according to any of claims 1 to 4, **characterised in that** the silicon weight content of the aluminium alloy of the said wrought product is between 0.50 % and 0.94%.

6. A process according to any of claims 1 to 5, **characterised in that** the two said 6xxx series aluminium wrought products are extrudate profiles.

7. A process according to any of claims 1 to 5, **characterised in that** the two said 6xxx series aluminium wrought products are forged products.

8. A process according to any of claims 1 to 5, **characterised in that** the two said 6xxx series aluminium wrought products are rolled products.

9. Use of a welded part obtained according to any of claims 1 to 8 as part of a transportation vehicle.

## Patentansprüche

1. Verfahren zur Herstellung eines Schweißteils, das die folgenden Schritte umfasst:
a) Bereitstellen zweier Aluminium-Kneterzeugnisse der 6xxx-Serie;
b) Zusammenfügen der zwei Kneterzeugnisse durch Lichtbogenschweißen mit einem Schweißdraht;
**dadurch gekennzeichnet, dass**
c) der Schweißdraht eine Aluminiumlegierung der 5xxx-Serie ist,
d) die Aluminiumlegierung der 6xxx-Serie des Kneterzeugnisses die folgende Zusammensetzung aufweist:
0,3 ≤ Si ≤ 1,0,
Fe ≤ 0,35,
Mn ≤ 1,
0,35 ≤ Mg ≤ 1,2,
Cr ≤ 0,35, vorzugsweise 0,10, stärker bevorzugt 0, 08,
Zn ≤ 0,20,
0,08 ≤ Ti ≤ 0,14,
sonstige Elemente und unvermeidbare Verunreinigungen je < 0,05 und insgesamt 0,15, der Rest Aluminium,
wobei das Verhältnis Mg/(Si-0,3^{∗}(Mn+Fe)) größer als 1,0 ist.

2. Verfahren nach Anspruch 1, wobei die Aluminiumlegierung der 5xxx-Serie des Schweißdrahtes zu der Gruppe bestehend aus AA5183, AA5087 und AA5356 gehört.

3. Verfahren nach den Ansprüchen 1 oder 2, **dadurch gekennzeichnet, dass** das Verhältnis Mg/(Si-0,3^{∗}(Mn+Fe)) der Aluminiumlegierung der 6xxx-Serie des Kneterzeugnisses kleiner als 1,7, vorzugsweise 1,5 ist.

4. Verfahren nach einem der Ansprüche 1 bis 3, **dadurch gekennzeichnet, dass** der Magnesiumgewichtsgehalt der Aluminiumlegierung des Kneterzeugnisses größer als 0,6 % ist.

5. Verfahren nach einem der Ansprüche 1 bis 4, **dadurch gekennzeichnet, dass** der Siliziumgewichtsgehalt der Aluminiumlegierung des Kneterzeugnisses zwischen 0,50 % und 0,94 % beträgt.

6. Verfahren nach einem der Ansprüche 1 bis 5, **dadurch gekennzeichnet, dass** die zwei Aluminium-Kneterzeugnisse der 6xxx-Serie Strangpressprofile sind.

7. Verfahren nach einem der Ansprüche 1 bis 5, **dadurch gekennzeichnet, dass** die zwei Aluminium-Kneterzeugnisse der 6xxx-Serie Schmiedeerzeugnisse sind.

8. Verfahren nach einem der Ansprüche 1 bis 5, **dadurch gekennzeichnet, dass** die zwei Aluminium-Kneterzeugnisse der 6xxx-Serie Walzerzeugnisse sind.

9. Verwendung eines Schweißteils, das nach einem der Ansprüche 1 bis 8 erhalten wird, als Teil eines Transportfahrzeugs.

## Revendications

1. Procédé de fabrication d'une pièce soudée comprenant les étapes suivantes :
a) la fourniture de deux produits corroyés en aluminium de série 6xxx ;
b) l'assemblage desdits deux produits corroyés par soudage à l'arc avec un fil d'apport ;
**caractérisé en ce que**
c) le fil d'apport est un alliage d'aluminium de série 5xxx
d) l'alliage d'aluminium de série 6xxx dudit produit corroyé présente la composition suivante :
0,3 ≤ Si ≤ 1,0
Fe ≤ 0,35
Mn ≤ 1
0,35 ≤ Mg ≤ 1,2
Cr ≤ 0,35, de préférence 0,10, de manière davantage préférée 0,08
Zn ≤ 0,20
0, 08 ≤ Ti ≤ 0,14
d'autres éléments et impuretés inévitables < 0,05 chaque et 0,15 au total, le reste étant de l'aluminium
dans lequel le rapport Mg/(Si - 0,3^{∗}(Mn + Fe)) est supérieur à 1,0.

2. Procédé selon la revendication 1, dans lequel l'alliage d'aluminium de série 5xxx dudit fil d'apport appartient au groupe consistant en AA5183, AA5087 et AA5356.

3. Procédé selon les revendications 1 ou 2, **caractérisé en ce que** le rapport Mg/(Si - 0,3^{∗}(Mn + Fe)) de l'alliage d'aluminium de série 6xxx du produit corroyé est inférieur à 1,7, de préférence 1,5.

4. Procédé selon l'une quelconque des revendications 1 à 3, **caractérisé en ce que** la teneur en poids de magnésium de l'alliage d'aluminium dudit produit corroyé est supérieure à 0,6 %.

5. Procédé selon l'une quelconque des revendications 1 à 4, **caractérisé en ce que** la teneur en poids de silicium de l'alliage d'aluminium dudit produit corroyé est comprise entre 0,50 % et 0,94 %.

6. Procédé selon l'une quelconque des revendications 1 à 5, **caractérisé en ce que** lesdits deux produits corroyés en aluminium de série 6xxx sont des profilés extrudés.

7. Procédé selon l'une quelconque des revendications 1 à 5, **caractérisé en ce que** lesdits deux produits corroyés en aluminium de série 6xxx sont des produits forgés.

8. Procédé selon l'une quelconque des revendications 1 à 5, **caractérisé en ce que** lesdits deux produits corroyés en aluminium de série 6xxx sont des produits laminés.

9. Utilisation d'une pièce soudée obtenue selon l'une quelconque des revendications 1 à 8 en tant que pièce d'un véhicule de transport.
